# EUROPEAN PATENT APPLICATION

(11) **EP 2 323 293 A1**
(43) Date of publication of application: **18.05.2011**
(21) Application number: 09175909.2
(22) Date of filing: 13.11.2009
(51) Int. Cl.: H04J 3/12, H04J 3/16, H04J 9/00

(54) **Method for transferring control data, transmission system, transmitter, and receiver**

(71) Applicant: Alcatel-Lucent Deutschland AG, 70435 Stuttgart (DE)
(72) Inventor: Jentsch, Lothar, 15370, Fredersdorf (DE); Pfeiffer, Thomas, 70569, Stuttgart (DE); Poehlmann, Wolfgang, 71282, Hemmingen (DE); Schmuck, Harald, 71701, Schwieberdingen (DE)
(74) Representative: Brose, Gerhard

(57) **Abstract**

The invention relates to a method for transferring control data (CD) in a transmission system for transferring payload data (UD), where the transmission rate of the control data (CD) is small compared to the transmission rate of the payload data (UD), in which the payload data (UD) or their clock signal (CL) is used as carrier for the control data (CD), to a transmission system, a transmitter (Fig, 2), and a Receiver.

## Description

The invention relates to a method for transferring control data in a transmission system for transferring payload data, where the transmission rate of the control data is small compared to the transmission rate of the payload data according to the preamble of claim 1, a transmission system according to the preamble of claim 4, a transmitter according to the preamble of claim 5, and a receiver according to the preamble of claim 6.

The invention originated in the field of optical access networks to the worldwide telecommunication network. But its application is not restricted thereto.

The payload data rate in such networks is in the range of 1.25 Gbps, 2.5 Gbps, or even higher. At least in the downstream direction from a central station to a subscriber a continuous data signal is used. An optical line termination unit at the central station, the OLT, is connected via a tree-shaped optical line network to a multiple of subscriber sided units. The data sent by such optical line termination unit OLT thus include payload data for all these subscribers. When no payload data are to be transferred, idle data patters are sent.

The tree-shaped optical line network may or may not include active elements like amplifiers or regenerators. In both cases such networks mostly are called passive optical Networks or PONs.

At the subscriber sided ends commonly equipment of both, the network provider, and the subscriber, is foreseen. The network provider's equipment is called a demarcation point unit or device, DPU or DPD; the subscriber's equipment is called terminal TE, customer premises equipment CPE, or optical network unit ONU.

In view of the high data rates used no measures are taken to allow for low data rates. Such networks have a high pass property with a pass band beginning at about 10 Mbit/s.

As an example, when taking into operation an ONU, such equipment first has to be configured. There are a couple of few parameters, to adjust the ONU. At the moment a wide-spread solution is the operation by "human resources". Also later on during normal operation a low capacity control channel could be helpful.

According to the invention this problem is solved by a method according to the teaching of claim 1, a transmission system according to the teaching of claim 4, a transmitter according to the teaching of claim 5, and a receiver according to the teaching of claim 6.

The idea is that the high bit rate payload channel is a carrier for a low capacity control channel.

Further embodiments of the invention are to be found in the subclaims and in the accompanying description.

In the following the invention will be described with reference to the accompanying drawings, in which:
Figure 1 shows a block diagram of a passive optical network PON as an example of a transmission system according to the invention.
Figure 2 shows a block diagram of an example of a transmitter according to the invention.
Figure 3 shows a block diagram of an example of a receiver according to the invention.
Figure 4 shows a timing diagram with digital signals for exemplarily showing one example of a method for transferring control data according to the invention.
Figure 5 shows an other timing diagram for exemplarily showing one example of a method for transferring control data according to the invention.
Figure 6 shows a block diagram of an other example of a transmitter according to the invention.
Figure 7 shows a block diagram of an other example of a receiver according to the invention.

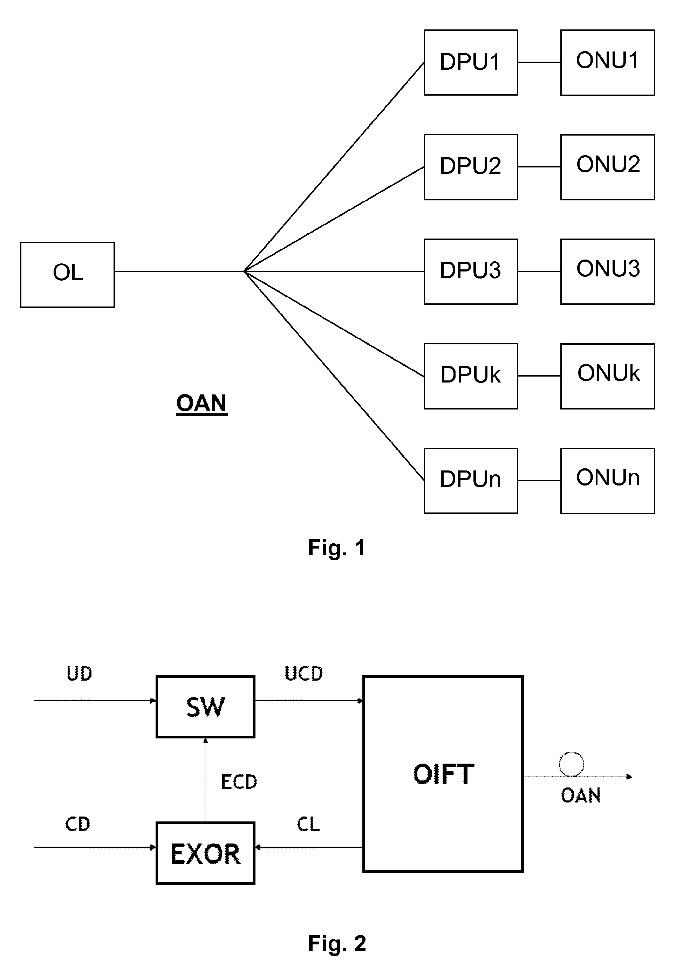

Figure 1 shows an optical access network OAN, here, as mostly, in the form of a tree shaped passive optical network PON. It includes an optical line termination unit OLT, the fiber links, and a number of, here n, sets of subscriber sided equipments.

In this example there is shown only one branching point, but there might be more of them. Especially at branching points there might also be active elements like amplifiers or regenerators.

Each set of subscriber sided equipment mainly consists of a demarcation point unit DPUk and an optical network unit ONUk. The demarcation point units DPUk are under the responsibility of the network provider and normally also in his ownership; the optical network units ONUk are under the responsibility of the respective subscriber.

The demarcation point units DPUK are not absolutely necessary. When foreseen, they serve the network provider to monitor the fiber link. At least during normal operation the optical signals pass these units unaffected. There are no parameters to be adjusted.

The optical network units ONUk are to be adapted to the operation within the whole system before they are allowed to start their transmission. Such adaptation mainly comprises synchronization and adjusting the correct wavelength. Before a correct adaptation is reached, the use of the high capacity data path is impossible. That is the reason, why the adaptation as such can not be remotely controlled visa the normal optical data path. And that is why the present invention foresees an additional separate data path. And of course such additional data path does not need to be a high capacity data path.

The invention therefore suggests modulating the control data onto the clock signal of the payload data. With modulating a low capacity data signal, that is a slow signal, onto a high capacity signal one reaches some kind of a DC-free signal, Where "DC" is the range up to some 10 Mbit/s.

A direct modulation onto the payload data would result in the same effect for the control data, but the quality of the payload data Could be harmed. It depends on the circumstances, whether this could be accepted. At least in times where idle data patterns are sent, no such harm would arise. Also where the relationship between the transmission rates of control data and payload data is very high and a phase shift coding as shown in figures 2 to 4 is used, a severe harm, e.g. by additional jitter, is hardly to be expected.

Figure 2 now shows one example of a transmitter that could be used in the optical line termination unit OLT for reaching such goal. It shows a switch SW, an EXOR gate EXOR and a transmitter-sided optical interface OIFT.

The EXOR gate EXOR encodes control data CD entering this transmitter by applying an EXOR function to both, these control data CD and clock signal CL coming from the transmitter-sided optical interface OIFT. The result is an encoded control data signal ECD. The switch SW either switches through this encoded control data signal ECD or useful or payload data UD and forwards the switched-through user and control data signal UCD to the input of the transmitter-sided optical interface OIFT. There this signal undergoes usual transmission technical functions and is sent to the optical access network OAN.

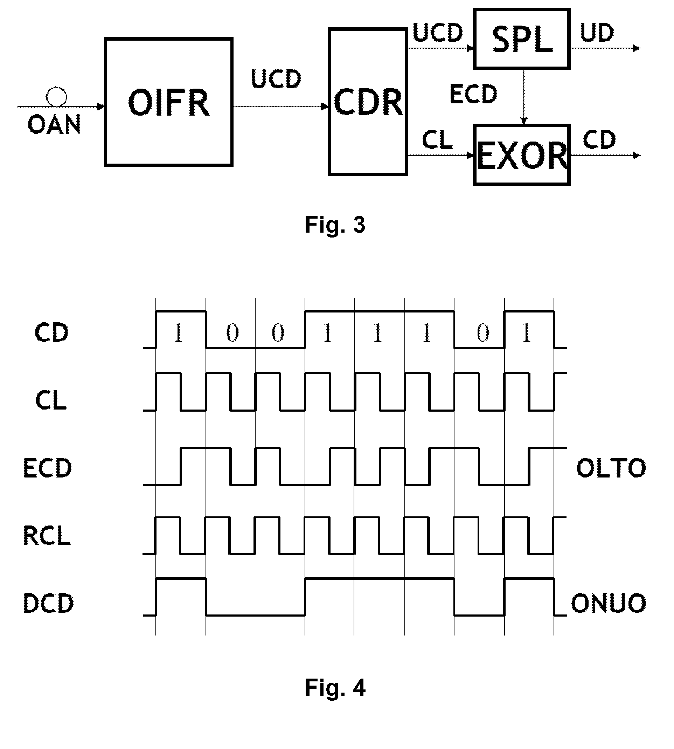

Figure 3 shows an example of a receiver for cooperating in an optical network unit ONUk with the transmitter shown in figure 2. it a receiver-sided optical interface OIFR, a clock and data recovering module CDR, a splitter SPL, and an EXOR gate EXOR.

The received-sided optical interface OIFR receives the signal coming from the optical access network OAN and retrieves therefrom the user and control data signal UCD, from which in the clock and data recovering module CDR clock CL and user and control data UCD are separated. The receiver-sided optical interface OIFR together with the clock and data recovering module CDR fulfill the usual receiver-sided transmission technical functions.

In using a transmitter as shown in figure 2 in combination with a receiver as shown in figure 3 a phase shift coding of the clock CL by the control data CD is achieved. Figure 4 shows related timing diagrams. It is to be emphasized that figure 4 is by no means to scale with respect to the used transmission rates. Here the clock rate of clock CL is shown as being merely twice the transmission rate of the control data CD, while it is supposed to be in the range of 1:100.000 up to 1:1.000.000.

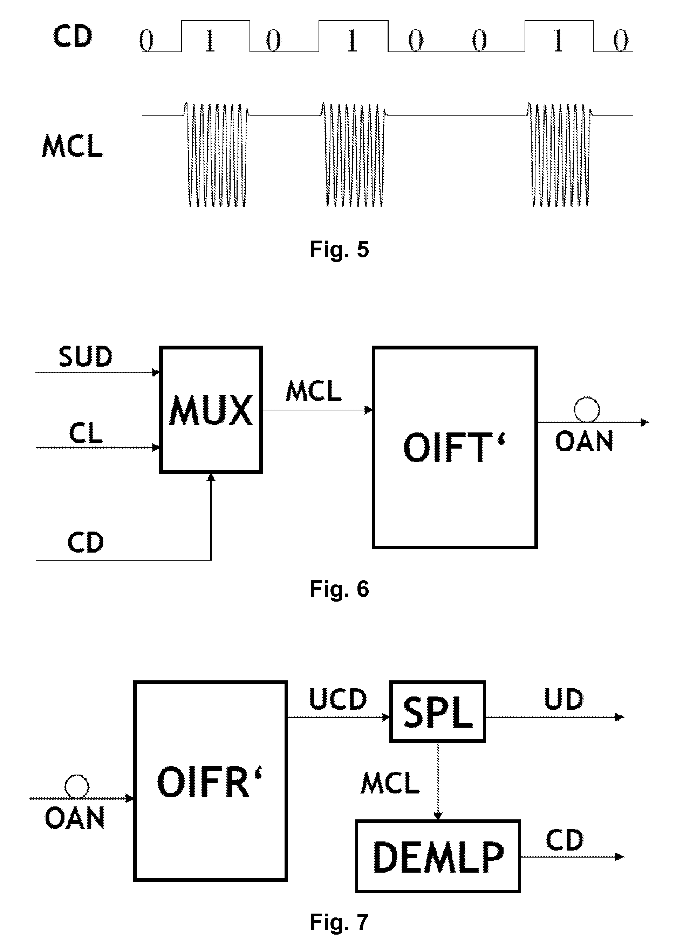

An other possible solution is shown in figures 5 to 7.

Figure 5 shows the timing diagrams, here a little bit more to scale. It shows the control data CD and the resulting modulated clock signal MCL.

Such result could be reached in a transmitter as shown in figure 6. This figure shows a multiplexer MUX and a transmitter-sided optical interface OIFT'.

The multiplexer MUX is controlled by the control data CD and switches between the clock CL and a static level SUD on the user data channel, resulting in the modulated clock signal MCL shown in figure 5. This signal is sent via the transmitter-sided optical interface OIFT' to the optical access network OAN.

A receiver for cooperating in an optical network unit ONUk with the transmitter shown in figure 6 is shown in figure 7. It includes a receiver-sided optical interface OIFR', a splitter SPL and a demodulator and low-pass filter unit DEMLP.

The receiver-sided optical interface OIFR' receives the signal coming from the optical access network OAN and retrieves therefrom the user and control data signal UCD and retrieves therefrom the user and control data signal UCD, as in the example of figure 3. This user and control data signal UCD is split in the splitter SPL into two identical signals, one being used during normal operation, when the transmitted data are useful or payload data UD, the other being used when control data are sent and the user and control data signal UCD is the modulated clock signal MCL. The demodulator and low-pass filter unit DEMLP then retrieves therefrom the control data CD.

## Claims

1. Method for transferring control data (CD) in a transmission system for transferring payload data (UD), where the transmission rate of the control data (CD) is small compared to the transmission rate of the payload data (UD), **characterized in, that** the payload data (UD) or their clock signal (CL) is used as carrier for the control data (CD).

2. Method according to claim 1, **characterized in, that** the payload data (UD) or their clock signal (UD) are phase shift modulated by the control data (CD).

3. Method according to claim 1, **characterized in, that** the amplitude of the payload data (UD) or their clock signal (UD) is modulated by the control data (CD).

4. Transmission system for transferring payload data (UD) with the potential to transfer control data (CD), the transmission rate of which is small compared to the transmission rate of the payload data (UD), **characterized in, that** the transmission system includes a modulator (EXOR, MUX) and a demodulator (EXOR, DEMPL) for the payload data (UD) or their clock signal (CL) as carrier for the control data (CD).

5. Transmitter (OLT) for a transmission system for transferring payload data (UD) with the potential to transfer control data (CD), the transmission rate of which is small compared to the transmission rate of the payload data (UD), **characterized in, that** the transmitter (OLT) includes a modulator (EXOR, MUX) for modulating the control data (CD) onto the payload data (UD) or their clock signal (CL).

6. Receiver (ONUk) for a transmission system for transferring payload data (UD) with the potential to transfer control data (CD), the transmission rate of which is small compared to the transmission rate of the payload data (UD), **characterized in, that** the receiver includes a demodulator (EXOR, DEMPL) to recover the control data.
